# EUROPÄISCHE PATENTSCHRIFT

(11) **EP 3 033 175 B1**
(45) Veröffentlichungstag und Bekanntmachung des Hinweises auf die Patenterteilung: **01.11.2017**
(21) Anmeldenummer: 14731158.3
(22) Anmeldetag: 13.06.2014
(51) Int. Cl.: B01J 49/00, B01J 49/09, C02F 1/42

(54) **VERFAHREN ZUM REGENERIEREN EINES MISCHBETTFILTERS UND VORRICHTUNG ZUR AUSFÜHRUNG EINES SOLCHEN VERFAHRENS**
METHOD FOR REGENERATING A MIXED-BED FILTER AND DEVICE FOR PERFORMING SUCH A METHOD
PROCÉDÉ POUR RÉGÉNÉRER UN FILTRE À LIT MÉLANGÉ ET DISPOSITIF POUR RÉALISER CE TYPE DE PROCÉDÉ

(30) Priorität: 23.07.2013 DE 102013012202
(43) Veröffentlichungstag der Anmeldung: 22.06.2016
(73) Patentinhaber: Veolia Water Solutions & Technologies Support, 94410 Saint-Maurice (FR)
(72) Erfinder: MEYERHOFF, Thomas, 29303 Bergen (DE); LIST, Knut, 30163 Hannover (DE)
(74) Vertreter: Methling, Frank-Oliver
(86) Internationale Anmeldenummer: PCT/EP2014/001606
(87) Internationale Veröffentlichungsnummer: WO 2015/010755

(56) Entgegenhaltungen:
- DE-A1- 3 313 471
- DE-A1- 3 438 523
- JP-A- 2001 079 424

## Beschreibung

Die Erfindung betrifft ein Verfahren zum Regenerieren eines Mischbettfilters, wobei in einem ersten Behälter eine Auftrennung von erschöpftem lonenaustauschermaterial in ein Anionenaustauschermaterial und in ein Kationenaustauschermaterial vorgenommen wird, bei der sich zwischen dem Anionenaustauschermaterial und dem Kationenaustauschermaterial eine Materialtrennschicht ausbildet, und wobei sowohl das Anionenaustauschermaterial als auch das Kationenaustauschermaterial in dem ersten Behälter regeneriert werden.

Ferner betrifft die Erfindung eine Vorrichtung zur Ausführung eines solchen Verfahrens.

Mischbettfilter werden zur Wasseraufbereitung genutzt. Sie weisen wenigstens ein Kationenaustauschermaterial und wenigstens ein Anionenaustauschermaterial auf, üblicherweise ein Kationenaustauscherharz und ein Anionenaustauscherharz. Durch das Kationenaustauschermaterial und das Anionenaustauschermaterial eines Mischbettfilters werden ionogene Verbindungen aus dem Wasser entfernt. Einsatz finden Mischbettfilter beispielsweise in Kondensatreinigungsanlagen, welche insbesondere in der Kraftwerks- und Chemieindustrie eingesetzt werden, um Turbinen- oder Prozesskondensate aufzubereiten. Zielsetzung hierbei ist, Aggregate oder Bauteile innerhalb des Wasser-Dampfkreislaufes vor Korrosion oder Ablagerungen zu schützen. Dabei ist es von Bedeutung, neben Korrosionspartikeln, die mechanisch abfiltriert werden, des Weiteren Spurenverunreinigungen des Wassers mit Kieselsäure, Natrium und anderen Ionen, die durch die Nachspeisung mit entmineralisiertem Wasser in den Wasser-Dampfkreislauf eingetragen werden, zu entfernen. Diese Spurenverunreinigungen können mittels lonenaustauscherharzen entfernt werden. Sind dabei Kationen- und Anionenaustauscherharze gemischt in einem Behälter, so spricht man vom Mischbettaustauscher beziehungsweise Mischbettfilter. Da die durch den Mischbettfilter herausgefilterten ionogenen Verbindungen am lonenaustauschermaterial gebunden werden, sind die Mischbettfilter nach einer bestimmten Anwendungsdauer erschöpft und der Mischbettfilter muss regeneriert werden, was ein Regenerieren des lonenaustauschermaterials erfordert. Bei der Regeneration des lonenaustauschermaterials sollte das jeweilige lonenaustauschermaterial nur mit der vorgesehenen Regenerierchemikalie beaufschlagt werden. Sogenannte Querverunreinigungen sind dabei zu vermeiden, da hierdurch später Verunreinigungen in den Wasser-Dampfkreislauf eingebracht werden können.

Aus der Druckschrift DE 33 13 471 A1 ist ein Verfahren zur internen Regeneration von Mischbettfiltern bekannt, bei dem die Auftrennung des erschöpften lonenaustauschermaterials des Mischbettes in Kationenaustauschermaterial und Anionenaustauschermaterial in einem ersten Behälter mittels aufströmender Flüssigkeit vorgenommen wird, und bei dem das Kationenaustauschermaterial und das Anionenaustauschermaterial in dem ersten Behälter regeneriert und ausgewaschen wird. Bei diesem Verfahren ist dabei vorgesehen, dass nach dem Auftrennen des erschöpften lonenaustauschermaterials und nach dem Regenerieren und Auswaschen des Kationenaustauschermaterials und des Anionenaustauschermaterials die im Bereich der sich zwischen dem Kationenaustauschermaterial und dem Anionenaustauschermaterial ausbildenden Materialtrennschicht befindliche Austauschermasse aus dem ersten Behälter entfernt und in einen weiteren Behälter verbracht wird. Das in dem ersten Behälter verbliebene Kationenaustauschermaterial wird dann mit dem in dem Mischbettfilter verbliebenen Anionenaustauschermaterial für einen neuen Arbeitstakt gemischt. Bevor oder während ein erschöpftes lonenaustauschermaterial zu einer erneuten Regenerierung des Mischbettfilters aufgetrennt wird, wird das in den weiteren Behältern verbrachte Material wieder dem lonenaustauschermaterial zugeführt. Problematisch bei diesem Verfahren ist das Verbringen der im Bereich der Materialtrennschicht befindlichen Austauschermasse aus dem ersten Behälter in den weiteren Behälter.

Ferner ist aus der Druckschrift DE 27 43 608 C2 ein Verfahren zur externen Regeneration von erschöpften Anionen- und Kationenaustauscherharzen eines Mischbettfilters bekannt. Bei diesem Verfahren werden die vermischten Kationen- und Anionenaustauscherharze ebenfalls mittels einer aufströmenden Flüssigkeit in einem ersten Behälter in Kationen- und Anionenaustauscherharze getrennt, wobei sich zwischen den beiden Harztypen eine Materialtrennschicht beziehungsweise eine Mischharzzone ausgebildet. Nach dem Auftrennen wird das eine Anionenaustauscherharz aus dem ersten Behälter zur Regeneration in einen zweiten Behälter transportiert. Die Mischharzzone wird in einem weiteren Verfahrensschritt aus dem ersten Behälter in einen dritten Behälter verbracht. Das in dem ersten Behälter verbliebene reine Kationenaustauscherharz wird dann regeneriert und nach der Regenerierung das regenerierte Anionenaustauscherharz und das regenerierte Kationenaustauscherharz zusammengeführt und gemischt. Zu Beginn einer erneuten Aufbereitung von erschöpften lonenaustauscherharzen wird das in dem dritten Behälter befindliche Material den erschöpften lonenaustauscherharzen zugeführt. Nachteilig hierbei ist, dass eine Kontamination von Kationenaustauschermaterial mit Anionenaustauschermaterial und umgekehrt erfolgen kann. Bei der Wasseraufbereitung führt dies zu einer schlechten Wasserqualität.

Aus Dokument JP 2001 079424 A ist eine Vorrichtung zur Aufbereitung von lonenaustauschermaterial bekannt, bei dem ein erster Sammelbehälter angeordnet ist, von welchem aus das aufzubereitende Material in einen zweiten Behälter geleitet werden kann, in dem das Auftrennen in Anionen- und Kationenaustauschermaterial und in eine Mischzone stattfindet, wobei das Material der Mischzone in einen dritten Behälter geleitet werden kann und das Anionen- und Kationenaustauschermaterial in einen vierten Behälter geleitet werden kann, wobei die Anionen und Kationen innerhalb einer Leitung in den vierten Behälter geleitet werden können und von dem dritten Behälter aus das Material der Mischzone zurück in den zweiten Behälter geleitet werden kann und eine Leitung zwischen dem vierten und dem ersten Sammelbehälter besteht.

Vor diesem Hintergrund ist es eine Aufgabe der vorliegenden Erfindung, ein verbessertes Regenerieren von Mischbettfiltern zu ermöglichen, wobei insbesondere eine Bildung von crosskontaminiertem Material verhindert wird. Darüber hinaus soll insbesondere eine vergleichsweise einfache Ausführbarkeit eines Verfahrens zum Regenieren von Mischbettfiltern mit einem zuverlässigen Transport von Ionenaustauschermaterialmengen von einem Ausgangsbehälter in einen Zielbehälter realisiert werden.

Zur Lösung dieser Aufgabe wird ein Verfahren zum Regenerieren eines Mischbettfilters gemäß Anspruch 1 vorgeschlagen. Das Auftrennen des erschöpften lonenaustauschermaterials in ein Anionenaustauschermaterial und in ein Kationenaustauschermaterial erfolgt dabei vorzugsweise mittels einer in dem ersten Behälter aufströmenden Flüssigkeit. Insbesondere ist vorgesehen, dass das Auftrennen des erschöpften lonenaustauschermaterials durch Rückspülung mit Wasser erfolgt. Vorteilhafterweise erfolgt vor dem Regenerieren der lonenaustauschermaterialien eine mechanische Reinigung der lonenaustauschermaterialien. Die Regeneration des Anionenaustauschermaterials und des Kationenaustauschermaterials erfolgt vorteilhafterweise simultan. Da das Anionenaustauschermaterial üblicherweise eine geringere Dichte aufweist als das Kationenaustauschermaterial bildet sich nach dem Auftrennen des lonenaustauschermaterial eine obere Schicht von Anionenaustauschermaterial, eine untere Schicht von Kationenaustauschermaterial und eine Materialtrennschicht, in welcher Bestandteile von fehlbeladenem lonenaustauschermaterial angeordnet sind. Insbesondere ist vorgesehen, dass zum Regenerieren des Anionenaustauschermaterials eine Lauge, vorzugsweise Natronlauge, von oben in den ersten Behälter eingebracht wird. Zum Regenerieren des Kationenmaterials wird vorzugsweise eine Säure, insbesondere Chlorwasserstoffsäure oder Schwefelsäure, von unten in den ersten Behälter eingebracht. Eine im Bereich der Materialtrennschicht wirkende Drainage des ersten Behälters verhindert dabei vorteilhafterweise eine Vermischung der Regeneriermittel.

Insbesondere mittels eines in den ersten Behälter integrierten Schauglases, kann der Abtransport des lonenaustauschermaterials in den zweiten Behälter überwacht werden. Zum verbesserten Abtransport des Anionenaustauschermaterials in den zweiten Behälter wird vorteilhafterweise ein Treibfluid, vorzugsweise Wasser, von oben in den Behälter eingebracht und das Anionenaustauschermaterial vorzugsweise mittels einer am oberen Ende der Mischzone angeschlossenen Ableitung abgezogen und in den zweiten Behälter geleitet. Zum Verbringen des Materials der Mischzone in den dritten Behälter wird vorteilhafterweise ebenfalls ein Treibfluid, insbesondere Wasser, in den ersten Behälter eingebracht, vorzugsweise am oberen Ende des Behälters. Vorteilhafterweise wird das Material der Mischzone über eine am unteren Ende der Mischzone angeschlossene Ableitung abgezogen und in den dritten Behälter abgeleitet. Zum Verbringen des Kationenaustauschermaterials in den zweiten Behälter wird vorzugsweise ebenfalls ein Treibfluid, insbesondere Wasser, in den ersten Behälter eingebracht. Über eine am Boden, auf dem das Kationenaustauschermaterial aufliegt, angeschlossene Leitung des ersten Behälters wird das Kationenaustauschermaterial vorteilhafterweise von dem ersten Behälter abgezogen und in den zweiten Behälter geleitet. Mit dem Terminus einer am Boden angeschlossenen Leitung ist dabei insbesondere auch eine über dem Boden angebrachte und/oder von oben auf den Boden herabschauende Leitung begrifflich umfasst.

Das Mischen des Anionen- und des Kationenaustauschermaterials in dem zweiten Behälter erfolgt vorzugsweise durch Zuführung von Luft in den zweiten Behälter. Innerhalb des erfindungsgemäßen Verfahrens ist vorgesehen, dass das in den zweiten Behälter verbrachte Anionenaustauschermaterial in dem zweiten Behälter erneut regeneriert wird, bevor das regenerierte Kationenaustauschermaterial mit dem erneut regenerierten Anionenaustauschermaterial zusammengeführt wird. Durch eine erneute Regeneration des Anionenaustauschermaterials ist die Regenerierung des Anionenaustauschermaterials vorteilhafterweise weiter verbesserbar und kann somit insbesondere zu einer verbesserten Aufbereitung des lonenaustauschermaterials führen.

Insbesondere ist als weiterer Verfahrensschritt des erfindungsgemäßen Verfahrens vorgesehen, dass nach dem Zusammenführen des Kationenaustauschermaterials mit dem Anionenaustauschermaterial das in den dritten Behälter verbrachte Material der Mischzone wieder in den ersten Behälter verbracht wird. Dieses Material der Mischzone wird dann bei einem erneuten Befüllen des ersten Behälters mit erschöpftem lonenaustauschermaterial zusammen mit dem erschöpften lonenaustauschermaterial wiederum dem erfindungsgemäßen Verfahren unterzogen. Insbesondere ist vorgesehen, dass das Material der Mischzone mittels einer Wasserstrahlpumpe aus dem dritten Behälter in den ersten Behälter geleitet wird, wo das Material verbleibt bis die nächste erschöpfte Mischbett-Harzcharge in den ersten Behälter zur Regenerierung nach dem erfindungsgemäßen Verfahren eingefüllt wird.
Gemäß einer besonders bevorzugten Ausgestaltung des erfindungsgemäßen Verfahrens wird in einem ersten Verfahrensschritt das erschöpfte lonenaustauschermaterial von einem Arbeitsbehälter des Mischbettfilters in den ersten Behälter verbracht. Der erste Behälter ist insbesondere bei dieser Ausgestaltung nicht der Arbeitsbehälter des Mischbettfilters, in dem das lonenaustauschermaterial zur Filterung genutzt wird. Das heißt, dass insbesondere bei dieser Ausgestaltung eine externe Regeneration des erschöpften lonenaustauschermaterials eines Mischbettfilters erfolgt.

Bei einer weiteren vorteilhaften Ausgestaltung des erfindungsgemäßen Verfahrens wird die Mischzone derart festgelegt, dass eine an die Materialtrennschicht angrenzende Übergangsschicht des Kationenaustauschermaterials und/oder eine an die Materialtrennschicht angrenzende Übergangsschicht des Anionenaustauschermaterials der Mischzone zugeordnet ist. Hierdurch wird vorteilhafterweise die Wahrscheinlichkeit einer Crosskontamination des lonenaustauschermaterials weiter reduziert. Die Übergangsschicht des Kationenaustauschermaterials beziehungsweise die Übergangsschicht des Anionenaustauschermaterials bilden dabei jeweils quasi eine Pufferzone, durch welche vorteilhafterweise die Wahrscheinlichkeit stark erhöht wird, dass ausschließlich reines Anionenaustauschermaterial beziehungsweise ausschließlich reines Kationenaustauschermaterial in den zweiten Behälter verbracht wird. Insbesondere ist vorgesehen, dass die Mischzone derart festgelegt wird, dass die Schichtdicke der Übergangsschicht des Kationenaustauschermaterials wenigstens 100 Millimeter beträgt und/oder das die Schichtdicke der Übergangsschicht des Anionenaustauschermaterials wenigstens 100 Millimeter beträgt. Bei einer Schichtdicke der Materialtrennschicht von etwa 10 Millimetern bis etwa 20 Millimetern ist insbesondere vorgesehen, dass die Übergangsschicht mindestens doppelt so groß ist, vorzugsweise mindestens fünf Mal so groß ist, wie die Schichtdicke der Grenzschicht. Vorzugsweise ist die Mischzone insgesamt wenigstens 250 Millimeter dick. Es hat sich gezeigt, dass bei einer derartigen Dicke die Wahrscheinlichkeit des Verbleibs von crosskontaminiertem Material außerhalb der Mischzone gegen Null tendiert.

Gemäß einer weiteren vorteilhaften Ausgestaltung des erfindungsgemäßen Verfahrens ist vorgesehen, dass während des Verbringens des auf der unteren Trennvorrichtung des Ausgangsbehälters liegende lonenaustauschermaterial von einem Ausgangsbehälter in einen Zielbehälter eine Wirbelströmung in dem Ausgangsbehälter erzeugt wird. Insbesondere ist vorgesehen, dass ein Strudel als Wirbelströmung erzeug wird, dessen Zentrum in der Mittelachse des Behälters liegt. Durch die Erzeugung einer Wirbelströmung hat sich gezeigt, dass der Abtransport des auf der unteren Trennvorrichtung des Ausgangsbehälters liegenden lonenaustauschermaterials, insbesondere von dem zweiten Behälter in den Arbeitsbehälter verbessert ist, insbesondere dahingehend, dass kein Material in dem zweiten Behälter , insbesondere Kationenaustauschermaterial verbleibt.

Gemäß einer weiteren vorteilhaften Ausgestaltung des erfindungsgemäßen Verfahrens ist vorgesehen, dass während des Verbringens des auf der unteren Trennvorrichtung des Ausgangsbehälters liegenden lonenaustauschermaterials von einem Ausgangsbehälter in einen Zielbehälter das in dem Ausgangsbehälter befindliche Material tangential angeströmt wird. Hierdurch wird vorteilhafterweise ebenfalls der Transport von einem Ausgangsbehälter in einen Zielbehälter weiter verbessert. Insbesondere kann durch das tangentiale Anströmen eine Wirbelströmung in dem Ausgangsbehälter erzeugt werden.. Vorteilhafterweise weist der erste Behälter zum verbesserten Entfernen des Materials des Mischharzes aus dem zweiten Behälter einen im unteren Bereich des ersten Behälters angeordneten Tangentialstutzen auf, über welchen eine Flüssigkeit, insbesondere Wasser, in den ersten Behälter eingeströmt werden kann, wobei die einströmende Flüssigkeit eine Wirbelströmung, insbesondere einen Strudel, erzeugt.

Zur Lösung der eingangs genannten Aufgabe wird des Weiteren eine Vorrichtung gemäß Anspruch 8 zur Ausführung des erfindungsgemäßen Verfahrens vorgeschlagen. Insbesondere ist vorgesehen, dass der erste Behälter im Wesentlichen kreiszylindrisch mit einer Bodenfläche und einer Deckfläche ausgebildet ist, wobei die Bodenfläche den ersten Behälter nach unten abschließt und die Deckfläche den ersten Behälter nach oben abschließt. Insbesondere ist vorgesehen, dass der Behälter im Wesentlichen nach Art eines geraden Kreiszylinders ausgebildet ist. Ferner ist insbesondere vorgesehen, dass der erste Behälter oberhalb der Bodenfläche eine flüssigkeitsdurchlässige Trennvorrichtung aufweist, auf welcher das lonenaustauschermaterial aufliegt.

Die Trennvorrichtung ist dabei vorteilhafterweise derart ausgebildet, dass das lonenaustauschermaterial nicht durch die Trennvorrichtung hindurchtreten kann. Insbesondere ist die Trennvorrichtung aber derart ausgebildet, dass eine Regeneriermittel enthaltene Flüssigkeit sowie eine Flüssigkeit zum Auftrennen des lonenaustauschermaterials durch die Trennvorrichtung hindurchtreten kann.

Bei dem ersten Behälter der Vorrichtung ist insbesondere vorgesehen, dass die Drainageeinheit in Höhe der sich nach dem Auftrennen des lonenaustauschermaterials ausgebildeten Materialtrennschicht angeordnet ist. Die Drainageeinheit ermöglicht vorteilhafterweise eine räumlich getrennte Regenerierung von Anionenaustauschermaterial und Kationenaustauschermaterial in demselben Behälter. Vorteilhafterweise wird ein zugeführtes Regeneriermittel über die Drainageeinheit abgeführt.

Vorzugsweise ist die erste Leitung des ersten Behälters am unteren Ende des ersten Behälters angeschlossen. Hierzu weist der erste Behälter vorteilhafterweise an dieser Stelle einen entsprechenden Anschluss, vorzugsweise einen Anschlussstutzen, zum Anschließen der Leitung auf. Der Anschluss der ersten Leitung ist dabei vorzugsweise derart ausgebildet, dass die erste Leitung unterhalb der Trennvorrichtung in den ersten Behälter eintritt.

Vorzugsweise ist die zweite Leitung am unteren Ende des ersten Behälters angeschlossen. Hierzu weist der erste Behälter vorteilhafterweise an dieser Stelle einen entsprechenden Anschluss, vorzugsweise einen Anschlussstutzen, zum Anschließen der Leitung auf. Die dritte Leitung ist vorzugsweise am oberen Ende des ersten Behälters angeschlossen. Hierzu weist der erste Behälter vorteilhafterweise an dieser Stelle einen entsprechenden Anschluss, vorzugsweise einen Anschlussstutzen, zum Anschließen der Leitung auf. Die vierte Leitung ist vorzugsweise am oberen Ende des ersten Behälters angeschlossen. Hierzu weist der erste Behälter vorteilhafterweise an dieser Stelle einen entsprechenden Anschluss, vorzugsweise einen Anschlussstutzen, zum Anschließen der Leitung auf. Insbesondere ist vorgesehen, dass die fünfte Leitung am oberen Ende einer festgelegten, die Materialtrennschicht umfassende Mischzone angeschlossen ist. Hierzu weist der erste Behälter vorteilhafterweise an dieser Stelle einen entsprechenden Anschluss, vorzugsweise einen Anschlussstutzen, zum Anschließen der Leitung auf. Vorteilhafterweise ist die sechste Leitung am unteren Ende einer festgelegten, die Materialtrennschicht umfassenden Mischzone angeschlossen. Hierzu weist der erste Behälter vorteilhafterweise an dieser Stelle einen entsprechenden Anschluss, vorzugsweise einen Anschlussstutzen, zum Anschließen der Leitung auf. Die siebte Leitung ist vorzugsweise am unteren Ende des ersten Behälters angeschlossen. Hierzu weist der erste Behälter vorteilhafterweise an dieser Stelle einen entsprechenden Anschluss, vorzugsweise einen Anschlussstutzen, zum Anschließen der Leitung auf.

Als unteres Ende des ersten Behälters ist insbesondere jeweils der Bereich beginnend mit der Bodenfläche des Behälters und endend bei etwa 20 % der Gesamthöhe des Behälters, vorzugsweise endend bei weniger als 10 % der Gesamthöhe des Behälters, vorgesehen. Als oberes Ende des ersten Behälters ist insbesondere jeweils der Bereich beginnend bei etwa 80 % der Gesamthöhe des Behälters, vorzugsweise beginnend bei mehr als 90 % der Gesamthöhe des Behälters, und endend mit der Deckfläche des Behälters vorgesehen. Innerhalb der erfindungsgemäßen Vorrichtung ist vorgesehen, dass der erste Behälter eine achte Leitung aufweist, wobei die achte Leitung am unteren Ende des ersten Behälters tangential zur Mantelfläche des ersten Behälters angeschlossen ist, derart, dass ein in den ersten Behälter über die achte Leitung einströmendes Fluid eine Wirbelströmung erzeugt. Vorzugsweise weist der erste Behälter hierzu an dessen unteren Ende einen Tangentialstutzen auf.

Bei einer weiteren besonders bevorzugten Ausgestaltung der erfindungsgemäßen Vorrichtung weist der erste Behälter eine neunte Leitung zum Zuleiten eines erschöpften lonenaustauschermaterials in den ersten Behälter auf, wobei die neunte Leitung am oberen Ende des ersten Behälters angeschlossen ist.

Weitere vorteilhafte Einzelheiten, Merkmale und Ausgestaltungsdetails der Erfindung werden im Zusammenhang mit den in den Figuren dargestellten Ausführungsbeispielen näher erläutert. Dabei zeigt:
- Fig. 1: in einer schematischen Darstellung ein Ausführungsbeispiel für eine erfindungsgemäße Vorrichtung zur Ausführung eines Verfahrens zum Regenerieren eines Mischbettfilters;
- Fig. 2 bis Fig. 8: jeweils in einer schematischen Darstellung die Vorrichtung gemäß Fig. 1 zu unterschiedlichen Zeitpunkten während der Ausführung eines Verfahrens zur Regenerierung eines Mischbettfilters;
- Fig. 9: in einer schematischen Darstellung ein Ausführungsbeispiel für die Festlegung einer Mischzone; und
- Fig. 10: in einer schematischen Darstellung eine Draufsicht auf ein Ausführungsbeispiel eines Behälters einer erfindungsgemäßen Vorrichtung mit Tangentialstutzen.

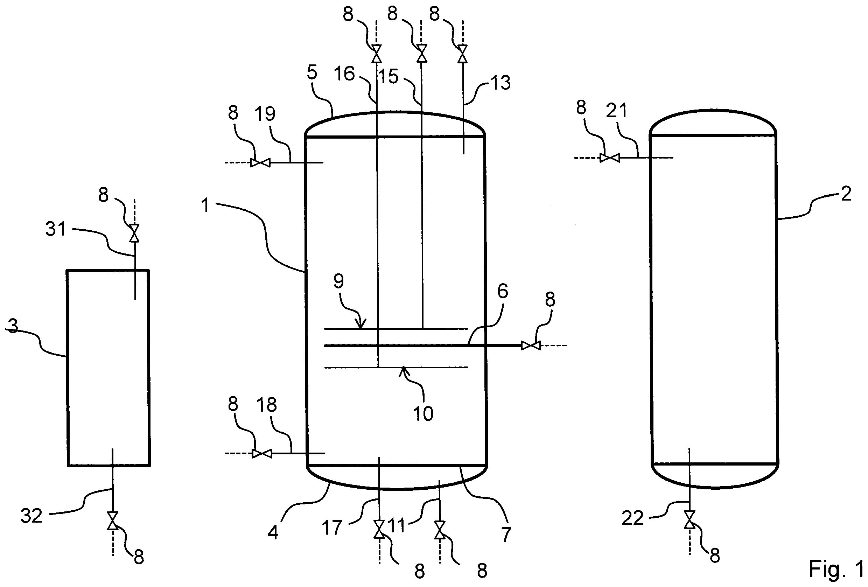

Anhand des in Fig. 1 dargestellten Ausführungsbeispiels wird eine erfindungsgemäße Vorrichtung zur Ausführung eines Verfahrens zum Regenerieren eines Mischbettfilters näher erläutert. Die Vorrichtung umfasst einen ersten Behälter 1, einen zweiten Behälter 2 und einen dritten Behälter 3. Der erste Behälter 1 ist im Wesentlichen kreiszylindrisch mit einer Bodenfläche 4 und einer Deckfläche 5 ausgebildet. Die Bodenfläche 4 schließt den Behälter 1 dabei nach unten ab. Die Deckfläche 5 schließt den Behälter 1 nach oben ab. Der erste Behälter 1 ist somit im Wesentlichen als gerader Kreiszylinder ausgebildet, in dem dargestellten Ausführungsbeispiel allerdings mit gewölbter Bodenfläche 4 und gewölbter Deckfläche 5.

Der erste Behälter 1 der Vorrichtung weist in dessen Inneren eine Drainageeinheit 6 auf. Diese Drainageeinheit 6 ist in der Höhe angeordnet, in der sich nach dem Auftrennen eines in den ersten Behälter 1 eingebrachten lonenaustauschermaterials die Materialtrennschicht ausbildet. Die Drainageeinheit 6 dient dabei insbesondere dazu, eine räumlich getrennte Regenerierung von Anionenaustauschermaterial und Kationenaustauschermaterial durchführen zu können.

Im unteren Bereich des ersten Behälters 1 weist der Behälter 1 zudem eine Trennvorrichtung 7 auf. Diese Trennvorrichtung 7 ist flüssigkeitsdurchlässig und verhindert, dass ein in den Behälter 1 eingebrachtes lonenaustauschermaterial bis zur Bodenfläche 4 absinkt. Die Trennvorrichtung 7 bildet dabei eine Tragfläche für ein in den ersten Behälter 1 eingebrachtes lonenaustauschermaterial.
Der erste Behälter 1 weist ferner eine Mehrzahl von Leitungen 11, 13, 15, 16, 17, 18, 19 auf, welche durch Ventile 8 öffenbar und verschließbar sind. Über die Leitung 11, die am unteren Ende des ersten Behälters 1 angeschlossen ist, und zwar unterhalb der Trennvorrichtung 7, kann eine Flüssigkeit, insbesondere Wasser, in den ersten Behälter 1 zur mechanischen Reinigung eines in dem Behälter 1 befindlichen lonenaustauschermaterials eingeleitet werden. Insbesondere kann durch über die Leitung 11 dem ersten Behälter 1 zugeleitetes Wasser ein Auftrennen eines in den Behälter 1 eingebrachten lonenaustauschermaterials in ein Anionenaustauschermaterial und in ein Kationenaustauschermaterial erfolgen. Ferner ist vorgesehen, dass über eine weitere separate hier nicht dargestellte Leitung ein Mittel zum Regenerieren eines in dem Behälter 1 befindlichen Kationenaustauschermaterials in den Behälter 1 einbringbar ist.

Am oberen Ende des ersten Behälters 1 weist der Behälter 1 eine weitere Leitung 13 auf. Über diese Leitung 13 kann insbesondere ein Regeneriermittel zum Regenerieren eines in dem Behälter 1 befindlichen Anionenaustauschermaterials in den Behälter 1 eingebracht werden. Darüber hinaus dient die Leitung 13 insbesondere dazu, Flüssigkeit, insbesondere Wasser, in den Behälter 1 einzuleiten, um in dem ersten Behälter 1 befindliches lonenaustauschermaterial verbessert aus dem ersten Behälter 1 in den zweiten Behälter 2 oder den dritten Behälter 3 verbringen zu können, vorzugsweise unter Einsatz einer Pumpe (in den Figuren nicht explizit dargestellt). Ferner weist der erste Behälter 1 insbesondere eine Leitung 15 zum Ableiten von Anionenaustauschermaterial aus dem ersten Behälter 1 und eine Leitung 16 zum Ableiten von Material der Mischzone aus dem ersten Behälter 1. Die Mischzone ist dabei in dem in Fig. 1 dargestellten Ausführungsbeispielen zwischen der Linie 9 und der Linie 10 festgelegt. Die Linie 9 stellt dabei das obere Ende der festgelegten Mischzone dar. Die Linie 10 stellt das untere Ende der festgelegten Mischzone dar. Die Leitung 15 des ersten Behälters 1 ist dabei am oberen Ende 9 der Mischzone an dem Behälter 1 angeschlossen. Die Leitung 16 des ersten Behälters 1 ist am unteren Ende 10 der Mischzone an dem Behälter 1 angeschlossen. Zum Ableiten von Kationenaustauschermaterial aus dem ersten Behälter 1 weist der Behälter 1 eine am unteren Ende des Behälters 1 angeschlossene Leitung 17 auf. Die Leitung 17 ist dabei oberhalb der Trennvorrichtung 7 des ersten Behälters 1 angeschlossen. In einer nicht dargestellten Alternative erfolgen der Anschluss und die Durchführung von unten durch den Düsenboden.

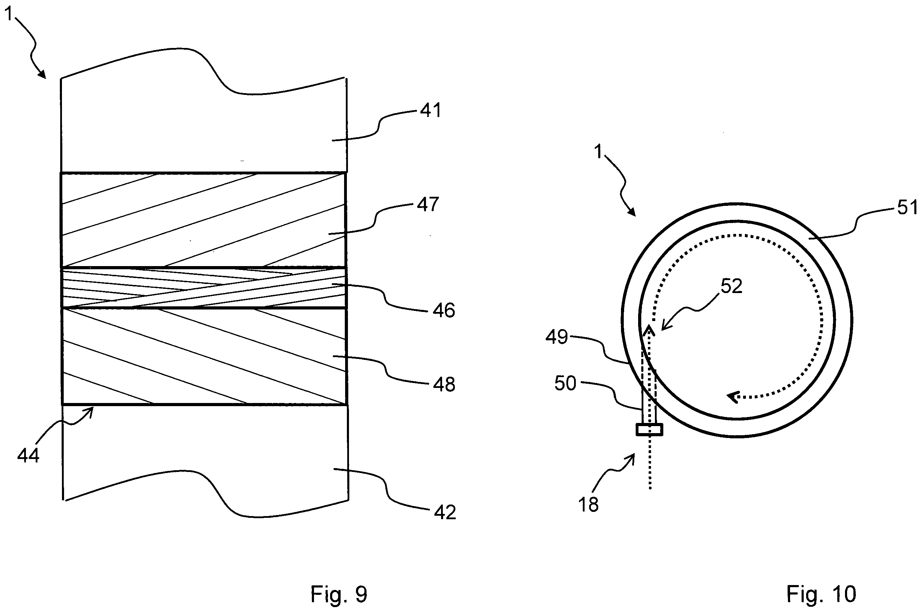

Der erste Behälter 1 weist eine weitere Leitung 18 auf. Diese Leitung 18 ist an dem unteren Ende des Behälters 1 aber oberhalb der Trennvorrichtung 7 an dem Behälter 1 angeschlossen. Die Leitung 18 ist dabei tangential zur Mantelfläche des Behälters 1 angeordnet. Vorzugsweise ist der Übergang von der Leitung 18 zu dem ersten Behälter 1 als Tangentialstutzen ausgebildet, wie vereinfacht in Fig. 10 dargestellt. Erfindungsgemäß ist die Leitung 18 derart an dem Behälter 1 angeordnet, dass ein in den ersten Behälter 1 über die Leitung 18 einströmendes Fluid, insbesondere Wasser, eine Wirbelströmung, insbesondere einen Strudel, innerhalb des ersten Behälters 1 erzeugt. Hierdurch ist vorteilhafterweise ein verbessertes Verbringen von in dem ersten Behälter 1 befindlichem lonenaustauschermaterial in einen weiteren Behälter 2, 3 ermöglicht.

Schließlich weist der erste Behälter eine Leitung 19 zum Zuleiten eines erschöpften lonenaustauschermaterials von einem weiteren Behälter (in Fig. 1 nicht explizit dargestellt) in den ersten Behälter 1 auf, welche an dem oberen

Ende des Behälters 1 angeschlossen ist. Insbesondere ist vorgesehen, dass aus dem Arbeitsbehälter des Mischbettfilters ein erschöpftes lonenaustauschermaterial über die Leitung 19 in den ersten Behälter 1 verbracht wird.

Der zweite Behälter 2 und der dritte Behälter 3 der in Fig. 1 dargestellten Vorrichtung weisen ebenfalls jeweils Leitungen 21, 22 beziehungsweise Leitungen 31, 32 auf, welche insbesondere zum Zuleiten und/oder zum Ableiten von lonenaustauschermaterial vorgesehen sind. Insbesondere ist vorgesehen, dass der zweite Behälter 2 und der dritte Behälter 3 über Leitungen mit dem ersten Behälter 1 verbunden sind (aus Gründen der besseren Übersicht in den Figuren nicht explizit dargestellt).

Insbesondere ist vorgesehen, dass die in Fig. 1 dargestellte Vorrichtung zur Ausführung eines Verfahrens zum Regenerieren eines Mischbettfilter eine Steuer- und/oder eine Regeleinrichtung sowie geeignete Sensorik umfasst (in den Figuren nicht explizit dargestellt), sodass ein erfindungsgemäßes Verfahren mittels der Vorrichtung zumindest teilweise automatisiert ausführbar ist.

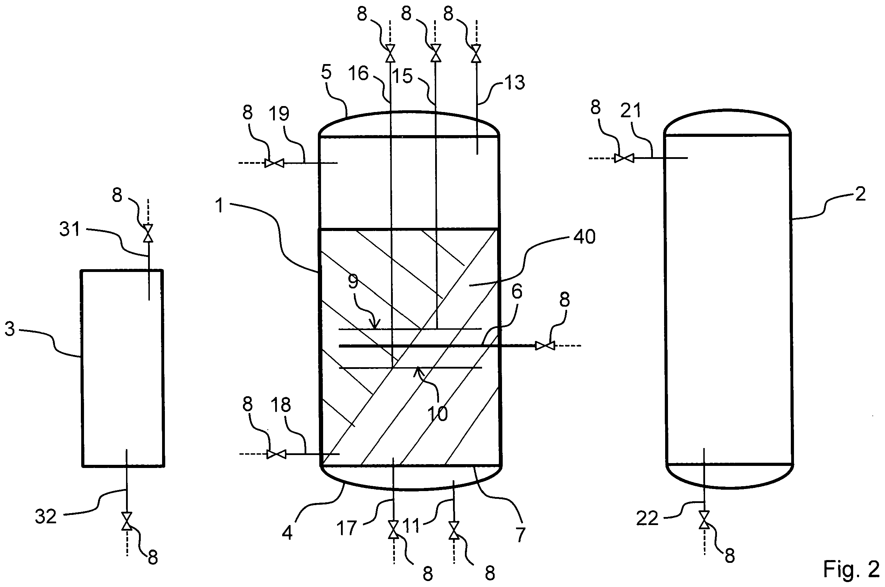

Im Zusammenhang mit Fig. 2 bis Fig. 8 wird ein Ausführungsbeispiel für ein erfindungsgemäßes Verfahren zum Regenerieren eines Mischbettfilters näher erläutert. Dabei ist in Fig. 2 bis Fig. 8 jeweils eine Vorrichtung zum Durchführen eines Verfahrens zum Regenerieren eines Mischbettfilters wie im Zusammenhang mit Fig. 1 erläutert, dargestellt.

Bei dem Ausführungsbeispiel für ein erfindungsgemäßes Verfahren wird in einem ersten Verfahrensschritt aus einem Arbeitsbehälter des Mischbettfilters (in Fig. 2 bis Fig. 8 nicht explizit dargestellt) ein erschöpftes lonenaustauschermaterial über die Leitung 19 in den ersten Behälter 1 der Vorrichtung verbracht. Fig. 2 zeigt dabei das in den ersten Behälter 1 verbrachte lonenaustauschermaterial 40. Das lonenaustauschermaterial 40 umfasst dabei in dem Ausführungsbeispiel ein Kationenaustauscherharz und ein Anionenaustauscherharz.

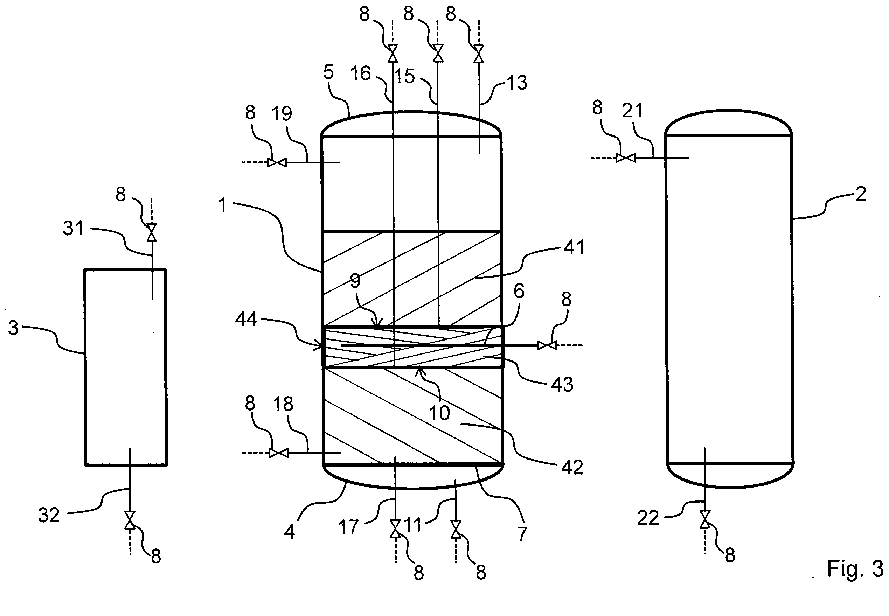

In einem weiteren Verfahrensschritt erfolgt eine Auftrennung des erschöpften lonenaustauschermaterials 40 in das Anionenaustauscherharz 41 und das Kationenaustauscherharz 42. Hierzu erfolgt über die Leitung 11 des ersten Behälters 1 eine Rückspülung mit Wasser, wobei durch das in dem Behälter 1 aufströmende Wasser und aufgrund der unterschiedlichen Dichten des Anionenaustauscherharzes 41 und des Kationenaustauscherharzes 42 eine schichtartige Auftrennung des erschöpften lonenaustauschermaterials 40 erfolgt, derart, dass sich zwischen dem Anionenaustauscherharz 41 und dem Kationenaustauscherharz 42 eine Materialtrennschicht ausbildet. In dieser Materialtrennschicht sind Bestandteile des lonenaustauschermaterials 40 vermischt und können bei der Regeneration fehlbeladen werden. Das Ergebnis der Auftrennung des lonenaustauschermaterials 40 ist schematisch in Fig. 3 dargestellt, wobei im unteren Bereich des ersten Behälters 1 das Kationenaustauscherharz 42 und im oberen Bereich des Behälters 1 das Anionenaustauscherharz 41 angeordnet ist. Zwischen dem Kationenaustauscherharz 42 und dem Anionenaustauscherharz 41 wird eine Mischzone 44 festgelegt, welche die Materialtrennschicht umfasst.

Die Mischzone 44 wird vorzugsweise derart festgelegt, dass eine an die Materialtrennschicht angrenzende Übergangsschicht des Kationenaustauscherharzes und eine an die Materialtrennschicht angrenzende Übergangsschicht des Anionenaustauscherharzes der Mischzone zugeordnet sind. Das heißt, das Material 43 der Mischzone 44 umfasst sowohl Anionenaustauscherharz als auch Kationenaustauscherharz. Die Mischzone 44 wird vorteilhafterweise derart festgelegt, dass oberhalb der Mischzone 44 nur reines Anionenaustauscherharz 41 und unterhalb der Mischzone 44 nur reines Kationenaustauscherharz 42 angeordnet ist. Wie aus Fig. 3 ersichtlich, ist die Drainageeinheit 6 des ersten Behälters 1 etwa mittig in der Mischzone 44 angeordnet.

In einem weiteren Verfahrensschritt wird das Anionenaustauscherharz 41 und das Kationenaustauscherharz 42 regeneriert. Dazu wird über die Leitung 13 des Behälters 1 Lauge in den Behälter 1 eingebracht. Diese Lauge durchspült das Anionenaustauscherharz 41 und wird über die Drainageeinheit 6 dem Behälter 1 wieder entzogen. Zum Regenerieren des Kationenaustauscherharzes 42 wird über die Leitung 11 des Behälters 1 Säure in den Behälter 1 eingebracht. Diese Säure durchspült das Kationenaustauscherharz 42 und wird über die Drainageeinheit 6 des Behälters 1 dem Behälter 1 wieder entzogen. Durch die gleichzeitige Durchströmung von oben und unten kommt das Kationenaustauscherharz 42 somit nicht in Kontakt mit der Lauge und das Anionenaustauscherharz 41 dabei vorteilhafterweise nicht in Kontakt mit der Säure. Vorzugsweise erfolgt die Regenerierung des Anionenaustauscherharzes 41 und des Kationenaustauscherharzes 42 simultan, das heißt es wird im Wesentlichen zeitgleich Lauge über die Leitung 13 und Säure über die Leitung 11 in den ersten Behälter 1 eingeleitet. Falls keine simultane Einleitung von Lauge und Säure wird von der "Gegenseite" Sperrwasser hinzugegeben.

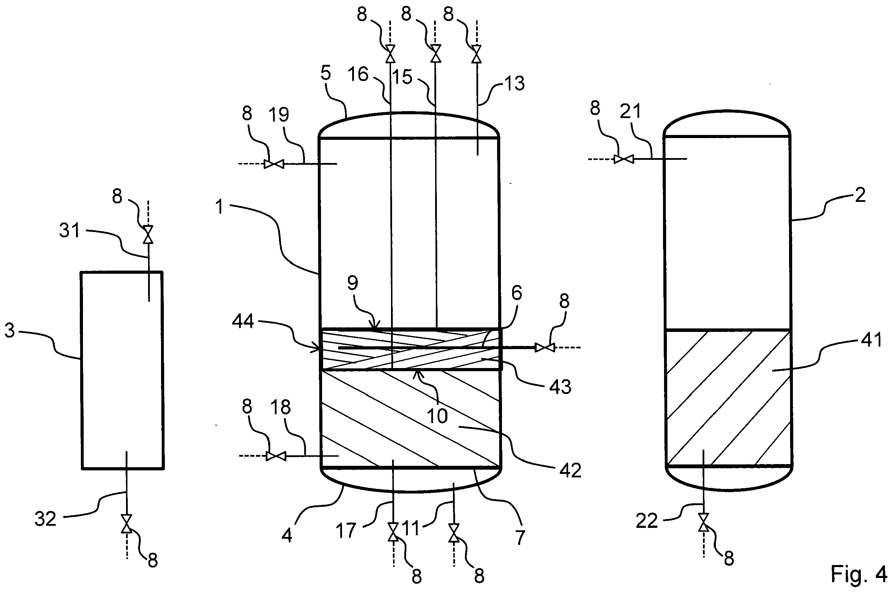

In einem weiteren Verfahrensschritt wird das an das Material 43 der Mischzone 44 angrenzende Anionenaustauscherharz 41 unter Nutzung der Leitung 15 in den zweiten Behälter 2 verbracht. Hierzu wird über die an dem ersten Behälter 1 angeschlossene Leitung 13 Treibwasser in den ersten Behälter 1 eingeleitet und das Anionenaustauscherharz 41 über die Leitung 15 des ersten Behälters 1 abgezogen und über die Leitung 21 des zweiten Behälters 2 in den zweiten Behälter 2 eingeleitet. Nachdem das Anionenaustauscherharz 41 von dem ersten Behälter 1 in den zweiten Behälter 2 verbracht worden ist, kann gemäß einer Ausgestaltungsvariante des Verfahrens eine erneute Regenerierung des Anionenaustauscherharzes 41 in dem Behälter 2 erfolgen. Fig. 4 zeigt das in den zweiten Behälter 2 verbrachte Anionenaustauscherharz 41 sowie das in dem Behälter 1 verbliebene Kationenaustauscherharz 42 und das in dem Behälter 1 verbliebene Material 43 der Mischzone 44.

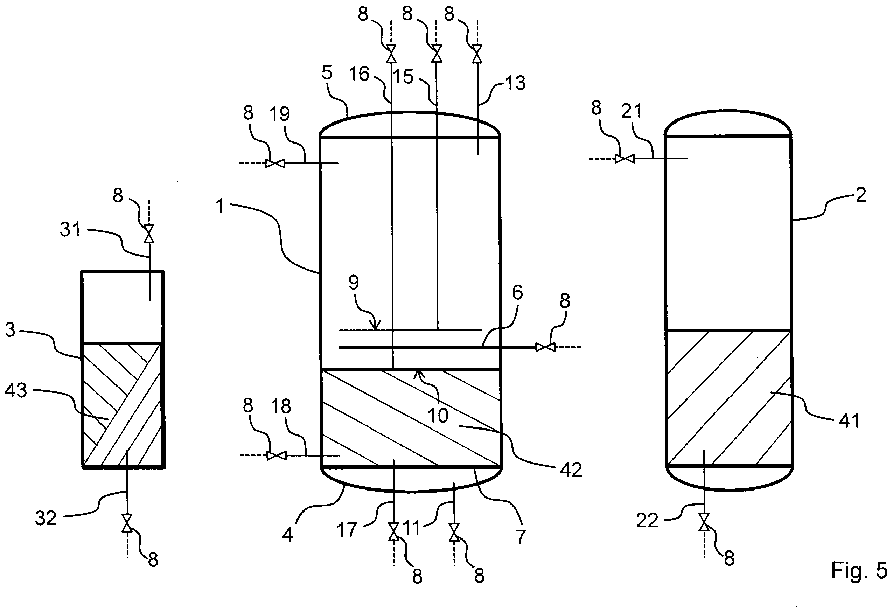

In einem weiteren Verfahrensschritt wird das Material 43 der Mischzone 44 in den dritten Behälter 3 verbracht. Hierzu wird wiederum über die an dem ersten Behälter 1 angeschlossene Leitung 13 Treibwasser in den Behälter 1 eingeleitet und das Material 43 der Mischzone 44 über die an dem ersten Behälter 1 am unteren Ende der Mischzone 44 angeschlossene Leitung 16 des Behälters 1 abgezogen. Über die Leitung 31 des dritten Behälters 3 wird das aus dem Behälter 1 abgezogene Material 43 der Mischzone 44 in den Behälter 3 geleitet. Um das Material 43 der Mischzone 44 möglichst vollständig aus dem ersten Behälter 1 zu entfernen, wird während des Verbringens des Materials 43 der Mischzone 44 von dem ersten Behälter 1 in den dritten Behälter 3 das in dem ersten Behälter 1 befindliche lonenaustauschermaterial über die Leitung 18 des ersten Behälters 1 tangential angeströmt, wodurch eine Wirbelströmung in dem Behälter 1 erzeugt wird. In Fig. 5 ist das weiterhin in dem zweiten Behälter 2 befindliche Anionenaustauscherharz 41, das in dem ersten Behälter 1 verbliebene Kationenaustauscherharz 42 und das in den dritten Behälter 3 verbrachte Material 43 der Mischzone 44 gezeigt.

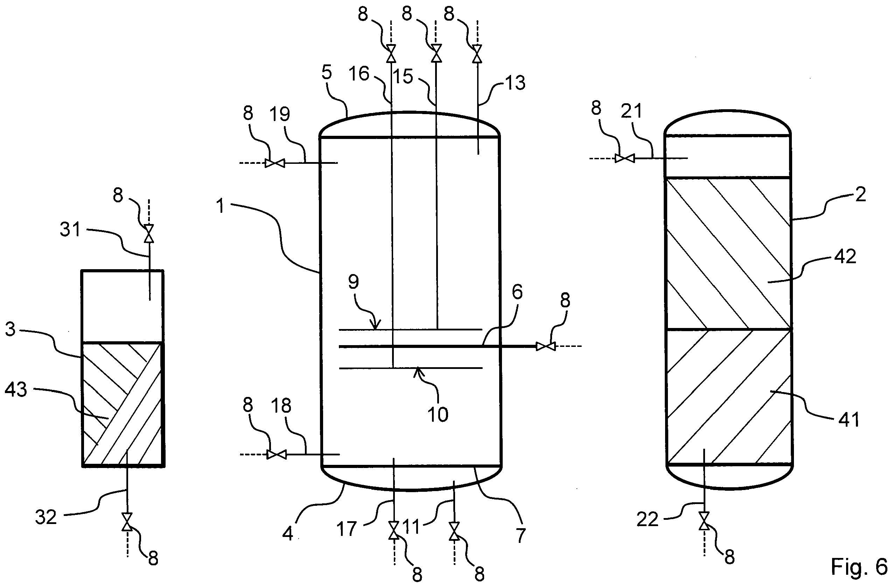

In einem weiteren Verfahrensschritt wird das in dem ersten Behälter 1 verbliebene Kationenaustauscherharz 42 aus dem Behälter 1 in den zweiten Behälter 2 zum Zusammenführen des regenerierten Kationenaustauscherharzes 42 mit dem regenerierten Anionenaustauscherharzes 41 verbracht. Dabei wird über die Leitung 13 des Behälters 1 Treibwasser in den Behälter 1 eingebracht und das Kationenaustauscherharz 42 über die am unteren Ende des ersten Behälters 1 angeschlossene Leitung 17 aus dem Behälter 1 abgezogen und über die Leitung 21 des zweiten Behälters 2 in den zweiten Behälter 2 geleitet. Dabei wird eine Wirbelströmung durch den Tangentialstutzen erzeugt. Fig. 6 zeigt dabei den nun leeren ersten Behälter 1, das in den zweiten Behälter 2 zusammengeführte Anionenaustauscherharz 41 und Kationenaustauscherharz 42 und das in dem dritten Behälter 3 befindliche Material 43 der Mischzone 44.

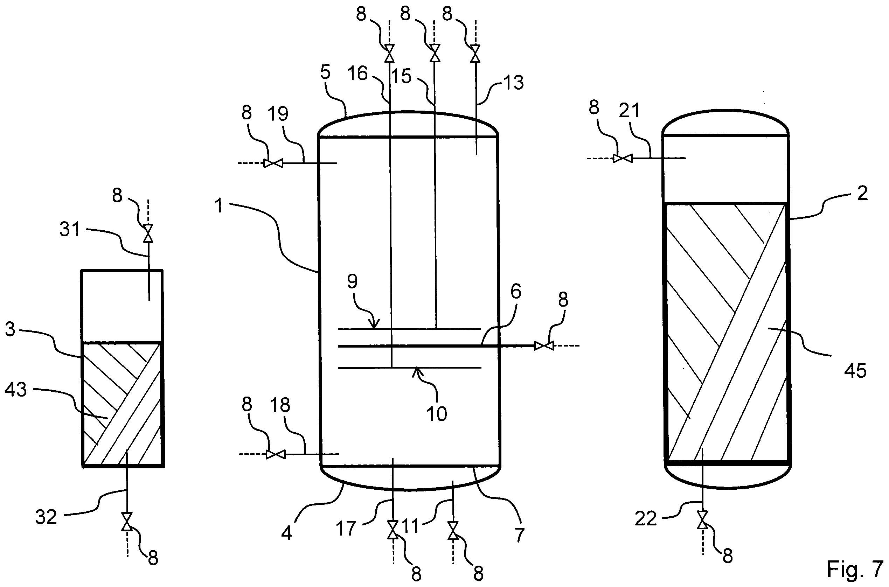

In einem weiteren Verfahrensschritt wird das in dem zweiten Behälter 2 zusammengeführte Kationenaustauscherharz 42 und Anionenaustauscherharz 41 gemischt. Dazu wird nach vorherigem Absenken des Wasserspiegels auf ca. 200mm oberhalb der Harzschicht im Behälter Luft zum Vermischen des Anionenaustauscherharzes 41 mit dem Kationenaustauscherharz 42 in den zweiten Behälter 2 eingebracht. Das in dem zweiten Behälter 2 befindliche regenerierte und gemischte lonenaustauschermaterial 45, welches nun wieder in dem Mischbett eines Mischbettfilters zur Aufbereitung von Wasser eingesetzt werden kann, zeigt Fig. 7.

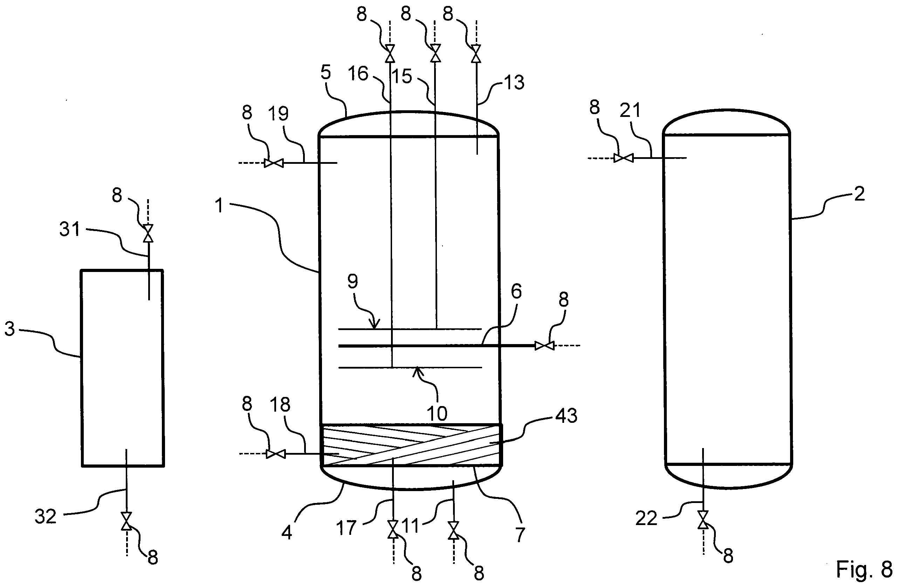

In einem letzten Verfahrensschritt wird das in dem dritten Behälter 3 befindliche Material 43 der Mischzone 44 wieder in den ersten Behälter 1 verbracht. Vorzugsweise wird das Material 43 der Mischzone 44 mittels einer Wasserstrahlpumpe (in den Figuren nicht explizit dargestellt) aus dem dritten Behälter 3 in den Behälter 1 geleitet. Das wieder in den ersten Behälter 1 verbrachte Material 43 der Mischzone 44 ist in Fig. 8 dargestellt. Das Material 43 verbleibt vorteilhafterweise in dem Behälter 1 bis das nächste erschöpfte lonenaustauschermaterial über die an dem ersten Behälter 1 angeschlossene Leitung 19 in den Behälter 1 zur Regenerierung eingefüllt wird und das Verfahren somit von neuem beginnt.

Anhand des in Fig. 9 dargestellten Ausschnitts eines ersten Behälters 1 einer Vorrichtung zur Ausführung eines Verfahrens zum Regenerieren eines Mischbettfilters wird die Festlegung der Mischzone 44 näher erläutert. Wie der schematischen Darstellung in Fig. 9 zu entnehmen ist, umfasst die Mischzone 44 eine Materialtrennschicht 46, die sich beim Auftrennen des erschöpften lonenaustauschermaterials in Kationenaustauschermaterial und Anionenaustauschermaterial ausbildet. In dieser Materialtrennschicht 46 kann insbesondere fehlbeladenes lonenaustauschermaterial enthalten sein. Die Mischzone 44 wird bei dem in Fig. 9 dargestellten Ausführungsbeispiel derart festgelegt, dass eine an die Materialtrennschicht 46 angrenzende Übergangsschicht 47 des Anionenaustauschermaterials 41 und eine an die Materialtrennschicht 46 angrenzende Übergangsschicht 48 des Kationenaustauschermaterials 42 der Mischzone 44 zugeordnet sind. Die Übergangsschichten 47, 48 dienen dabei quasi als Pufferzone, mit denen vorteilhafterweise zuverlässig verhindert wird, dass verunreinigtes lonenaustauschermaterial später dem Arbeitsbehälter des Mischbettfilters zugeleitet wird, was bei der Aufbereitung von Wasser zu schlechten Ergebnissen führen würde.

Die Materialtrennschicht 46 weist üblicherweise ein Dicke von etwa 10 Millimeter bis etwa 20 Millimeter auf. Die Übergangsschichten 47, 48 werden vorteilhafterweise jeweils wenigstens doppelt so groß festgelegt, wie die vorgenannte Dicke der Materialtrennschicht. Insbesondere ist vorgesehen, dass die Mischzone 44, also die Materialtrennschicht 46, die Übergangsschicht 47 und die Übergangsschicht 48 insgesamt eine Dicke von etwa 250 Millimetern aufweist.

Fig. 10 zeigt in einer stark vereinfachten Draufsicht auf einen ersten Behälter 1 einer im Zusammenhang mit Fig. 1 erläuterten Vorrichtung wie die Leitung 18 des ersten Behälters 1 tangential zur Mantelfläche 49 des Behälters 1 an dem Behälter 1 angeschlossen ist. Dazu weist der Behälter 1 einen Anschlussstutzen 50 auf, welcher nicht orthogonal zu der Wandung 51 des Behälters 1 ausgerichtet ist. Es ist aus der Darstellung in Fig. 10 ersichtlich, dass beim Einströmen einer Flüssigkeit 52 in den Behälter 1 über die Leitung 18 aufgrund der kreiszylindrischen Ausbildung des Behälters 1 eine Wirbelströmung in dem Behälter 1 erzeugt wird. Durch eine solche Wirbelströmung kann Material vorteilhafterweise verbessert aus dem Behälter 1 abgeleitet werden.

Die in den Figuren dargestellten und im Zusammenhang mit diesen erläuterten Ausführungsbeispiele dienen der Erläuterung der Erfindung und sind für diese nicht beschränkend.

## Patentansprüche

1. Verfahren zum Regenerieren eines Mischbettfilters, wobei in einem ersten Behälter (1) eine Auftrennung von erschöpftem lonenaustauschermaterial (40) in ein Anionenaustauschermaterial (41) und in ein Kationenaustauschermaterial (42) vorgenommen wird, bei der sich zwischen dem Anionenaustauschermaterial (41) und dem Kationenaustauschermaterial (42) eine Materialtrennschicht (46) ausbildet, und wobei sowohl das Anionenaustauschermaterial (41) als auch das Kationenaustauschermaterial (42) in dem ersten Behälter (1) regeneriert werden, **dadurch gekennzeichnet, dass**
- nach dem Regenerieren des lonenaustauschermaterials (41, 42) eine die Materialtrennschicht (46) umfassende Mischzone (44) festgelegt wird;
- das an das Material (43) der Mischzone (44) angrenzende Anionenaustauschermaterial (41) in einen zweiten Behälter (2) verbracht wird, wobei das in den zweiten Behälter (2) verbrachte Anionenaustauschermaterial (41) in dem zweiten Behälter (2) erneut regeneriert wird, bevor das regenerierte Kationenaustauschermaterial (42) mit dem erneut regenerierten Anionenaustauschermaterial (41) zusammengeführt wird;
- das Material (43) der Mischzone (44) in einen dritten Behälter (3) verbracht wird; und
- das in dem ersten Behälter (1) verbliebene regenerierte Kationenaustauschermaterial (42) mit dem regenerierten Anionenaustauschermaterial (41) zusammengeführt und vermischt wird.

2. Verfahren nach einem der vorhergehenden Ansprüche, **dadurch gekennzeichnet, dass** nach dem Zusammenführen des Kationenaustauschermaterials (42) mit dem Anionenaustauschermaterial (41) das in den dritten Behälter (3) verbrachte Material (43) der Mischzone (44) wieder in den ersten Behälter (1) verbracht wird.

3. Verfahren nach einem der vorhergehenden Ansprüche, **dadurch gekennzeichnet, dass** in einem ersten Verfahrensschritt das erschöpfte lonenaustauschermaterial (40) von einem Arbeitsbehälter eines Mischbettfilters in den ersten Behälter (1) verbracht wird.

4. Verfahren nach einem der vorhergehenden Ansprüche, **dadurch gekennzeichnet, dass** die Mischzone (44) derart festgelegt wird, dass eine an die Materialtrennschicht (46) angrenzende Übergangsschicht (48) des Kationenaustauschermaterials (42) und/oder eine an die Materialtrennschicht (46) angrenzende Übergangsschicht (47) des Anionenaustauschermaterials (41) der Mischzone (44) zugeordnet ist.

5. Verfahren nach Anspruch 4, **dadurch gekennzeichnet, dass** die Mischzone (44) derart festgelegt wird, dass die Schichtdicke der Übergangsschicht (48) des Kationenaustauschermaterials (42) wenigstens 100 Millimeter beträgt und/oder dass die Schichtdicke der Übergangsschicht (47) des Anionenaustauschermaterials (41) wenigstens 100 Millimeter beträgt.

6. Verfahren nach einem der vorhergehenden Ansprüche, **dadurch gekennzeichnet, dass** während des Verbringens des Anionenaustauschermaterials (41) und/oder des Kationenaustauschermaterials (42) und/oder des Materials (43) der Mischzone (44) von einem Ausgangsbehälter in einen Zielbehälter eine Wirbelströmung in dem Ausgangbehälter erzeugt wird.

7. Verfahren nach einem der vorhergehenden Ansprüche, **dadurch gekennzeichnet, dass** während des Verbringens des Anionenaustauschermaterials (41) und/oder des Kationenaustauschermaterials (42) und/oder des Materials (43) der Mischzone (44) von einem Ausgangsbehälter in einen Zielbehälter das in dem Ausgangsbehälter befindliche Material tangential angeströmt wird.

8. Vorrichtung zur Ausführung eines Verfahrens nach einem der Ansprüche 1 bis 7, umfassend einen ersten Behälter (1), einen zweiten Behälter (2) und einen dritten Behälter (3), wobei der zweite Behälter (2) und der dritte Behälter (3) über Leitungen mit dem ersten Behälter (1) verbunden sind, wobei der erste Behälter (1) aufweist:
- eine Drainageeinheit (6) zur räumlich getrennten Regenerierung von Anionenaustauschermaterial (41) und Kationenaustauschermaterial (42);
- eine erste Leitung (11) zum Zuleiten eines Fluids in den ersten Behälter (1), wobei mittels des über die erste Leitung zugeleiteten Fluids lonenaustauschermaterial (40) in Anionenaustauschermaterial (41) und Kationenaustauschermaterial (42) aufgetrennt wird, derart, dass sich zwischen dem Anionenaustauschermaterial (41) und dem Kationenaustauschermaterial (42) eine Materialtrennschicht (46) ausbildet;
- eine zweite Leitung zum Zuleiten eines Regeneriermittels in den ersten Behälter (1) zum Regenerieren des Kationenaustauschermaterials (42), wobei das zugeleitete Regeneriermittel über die Drainageeinheit (6) abgeleitet wird;
- eine dritte Leitung (13) zum Zuleiten eines Regeneriermittels in den ersten Behälter (1) zum Regenerieren des Anionenaustauschermaterials (41), wobei das zugeleitete Regeneriermittel über die Drainageeinheit (6) abgeleitet wird;
- eine vierte Leitung zum Zuleiten eines Treibfluids in den ersten Behälter;
- eine fünfte Leitung (15) zum Ableiten des Anionenaustauschermaterials
- eine sechste Leitung (16) zum Ableiten des Materials (43) der Mischzone (44) aus dem ersten Behälter; und
- eine siebte Leitung (17) zum Ableiten des Kationenaustauschermaterials (42) aus dem ersten Behälter (1); und
- eine achte Leitung (18), wobei die achte Leitung (18) am unteren Ende des ersten Behälters (1) tangential zur Mantelfläche (49) des ersten Behälters (1) angeschlossen ist, derart, dass ein in den ersten Behälter (1) über die achte Leitung (18) einströmendes Fluid eine Wirbelströmung erzeugt.

9. Vorrichtung nach Anspruch 8, **dadurch gekennzeichnet, dass** der erste Behälter (1) im Wesentlichen kreiszylindrisch mit einer Bodenfläche (4) und einer Deckfläche (5) ausgebildet ist, wobei die Bodenfläche (4) den ersten Behälter (1) nach unten abschließt und die Deckfläche (5) den ersten Behälter (1) nach oben abschließt.

10. Vorrichtung nach Anspruch 8 oder Anspruch 9, **dadurch gekennzeichnet, dass** die Drainageeinheit (6) in Höhe der sich nach dem Auftrennen des lonenaustauschermaterials (40) ausgebildeten Materialtrennschicht (46) angeordnet ist.

11. Vorrichtung nach einem der Ansprüche 8 bis 10, **dadurch gekennzeichnet, dass** die erste Leitung (11) am unteren Ende des ersten Behälters (1) angeschlossen ist.

12. Vorrichtung nach einem der Ansprüche 8 bis 11, **dadurch gekennzeichnet, dass** die zweite Leitung am unteren Ende des ersten Behälters (1) angeordnet ist.

13. Vorrichtung nach einem der Ansprüche 8 bis 12, **dadurch gekennzeichnet, dass** die dritte Leitung (13) am oberen Ende des ersten Behälters (1) angeschlossen ist.

14. Vorrichtung nach einem der Ansprüche 8 bis 13, **dadurch gekennzeichnet, dass** die vierte Leitung am oberen Ende des ersten Behälters (1) angeschlossen ist.

15. Vorrichtung nach einem der Ansprüche 8 bis 14, **dadurch gekennzeichnet, dass** die fünfte Leitung (15) am oberen Ende einer festgelegten, die Materialtrennschicht (46) umfassenden Mischzone (44) angeschlossen ist.

16. Vorrichtung nach einem der Ansprüche 8 bis 15, **dadurch gekennzeichnet, dass** die sechste Leitung (16) am unteren Ende einer festgelegten, die Materialtrennschicht (46) umfassenden Mischzone (44) angeschlossen ist.

17. Vorrichtung nach einem der Ansprüche 8 bis 16, **dadurch gekennzeichnet, dass** die siebte Leitung (17) am unteren Ende des ersten Behälters (1) angeschlossen ist.

18. Vorrichtung nach einem der Ansprüche 8 bis 17, **dadurch gekennzeichnet, dass** der erste Behälter (1) eine neunte Leitung (19) zum Zuleiten eines erschöpften lonenaustauschermaterials (40) in den ersten Behälter (1) aufweist, wobei die neunte Leitung (19) am oberen Ende des ersten Behälters (1) angeschlossen ist.

## Claims

1. Method for regenerating a mixed-bed filter, wherein a separation of spent ion exchange material (40) into an anion exchange material (41) and into a cation exchange material (42) is carried out in a first vessel (1), in which a material interlayer (46) is formed between the anion exchange material (41) and the cation exchange material (42), and wherein the anion exchange material (41) as well as the cation exchange material (42) are regenerated in the first vessel (1), **characterised in that**
- after the regeneration of the ion exchange material (41, 42) a mixing zone (44) is defined comprising the material interlayer (46);
- the anion exchange material (41) adjoining the material (43) of the mixing zone (44) is transferred to a second vessel (2), wherein the anion exchange material (41) transferred to the second vessel (2) is regenerated again in the second vessel (2) before the regenerated cation exchange material (42) is combined with the newly regenerated anion exchange material (41);
- the material (43) of the mixing zone (44) is transferred to a third vessel (3); and
- the regenerated cation exchange material (42) remaining in the first vessel (1) is combined and mixed with the regenerated anion exchange material (41).

2. Method according to any one of the preceding claims, **characterised in that** after the combination of the cation exchange material (42) with the anion exchange material (41) the material (43) of the mixing zone (44) transferred to the third vessel (3) is transferred back to the first vessel (1).

3. Method according to any one of the preceding claims, **characterised in that** in a first process step the spent ion exchange material (40) is transferred from a working vessel of a mixed-bed filter to the first vessel (1).

4. Method according to any one of the preceding claims, **characterised in that** the mixing zone (44) is defined in such a way that a transition layer (48) of the cation exchange material (42) adjoining the material interlayer (46) and/or a transition layer (47) of the anion exchange material (41) adjoining the material interlayer (46) is associated with the mixing zone (44).

5. Method according to claim 4, **characterised in that** the mixing zone (44) is defined in such a way that the layer thickness of the transition layer (48) of the cation exchange material (42) is at least 100 millimetres and/or that the layer thickness of the transition layer (47) of the anion exchange material (41) is at least 100 millimetres.

6. Method according to any one of the preceding claims, **characterised in that** during the transfer of the anion exchange material (41) and/or of the cation exchange material (42) and/or of the material (43) of the mixing zone (44) from a starting vessel to a target vessel, a fluidised flow is generated in the starting vessel.

7. Method according to any one of the preceding claims, **characterised in that** during the transfer of the anion exchange material (41) and/or of the cation exchange material (42) and/or of the material (43) of the mixing zone (44) from a starting vessel to a target vessel, the material present in the starting vessel is subjected to tangential flow.

8. Apparatus for carrying out a method according to any one of claims 1 to 7, comprising a first vessel (1), a second vessel (2) and a third vessel (3), wherein the second vessel (2) and the third vessel (3) are connected via lines to the first vessel (1), wherein the first vessel (1) comprises:
- a drainage unit (6) for the spatially separate regeneration of anion exchange material (41) and cation exchange material (42);
- a first line (11) for conveying a fluid to the first vessel (1), wherein by means of the fluid conveyed through the first line ion exchange material (40) is separated into anion exchange material (41) and cation exchange material (42) in such a way that a material interlayer (46) is formed between the anion exchange material (41) and the cation exchange material (42);
- a second line for conveying a regenerating means to the first vessel (1) for the regeneration of the cation exchange material (42), wherein the conveyed regenerating means is discharged via the drainage unit (6);
- a third line (13) for conveying a regenerating means to the first vessel (1) for the regeneration of the anion exchange material (41), wherein the conveyed regenerating means is discharged via the drainage unit (6);
- a fourth line for conveying a driving fluid to the first vessel;
- a fifth line (15) for discharging the anion exchange material (41)
- a sixth line (16) for discharging the material (43) of the mixing zone (44) from the first vessel; and
- a seventh line (17) for discharging the cation exchange material (42) from the first vessel (1), and
- an eighth line (18), wherein the eighth line (18) is connected at the lower end of the first vessel (1) tangentially to the circumferential surface (49) of the first vessel (1) in such a way that a fluid flowing through the eighth line (18) into the first vessel (1) generates a fluidised flow.

9. Apparatus according to claim 8, **characterised in that** the first vessel (1) is formed substantially circular cylindrically with a floor area (4) and a cover area (5), wherein the floor area (4) closes off the first vessel (1) downwards and the cover area (5) closes off the first vessel (1) upwards.

10. Apparatus according to claim 8 or 9, **characterised in that** the drainage unit (6) is arranged at the height of the material interlayer (46) formed after the separation of the ion exchange material (40).

11. Apparatus according to any one of claims 8 to 10, **characterised in that** the first line (11) is connected to the lower end of the first vessel (1).

12. Apparatus according to any one of claims 8 to 11, **characterised in that** the second line is arranged on the lower end of the first vessel (1).

13. Apparatus according to any one of claims 8 to 12, **characterised in that** the third line (13) is connected to the upper end of the first vessel (1).

14. Apparatus according to any one of claims 8 to 13, **characterised in that** the fourth line is connected to the upper end of the first vessel (1).

15. Apparatus according to any one of claims 8 to 14, **characterised in that** the fifth line (15) is connected to the upper end of a defined mixing zone (44) containing the material interlayer (46).

16. Apparatus according to any one of claims 8 to 15, **characterised in that** the sixth line (16) is connected to the lower end of a defined mixing zone (44) containing the material interlayer (46).

17. Apparatus according to any one of claims 8 to 16, **characterised in that** the seventh line (17) is connected to the lower end of the first vessel (1).

18. Apparatus according to any one of claims 8 to 17, **characterised in that** the first vessel (1) comprises a ninth line (19) for conveying a spent ion exchange material (40) to the first vessel (1), wherein the ninth line (19) is connected to the upper end of the first vessel (1).

## Revendications

1. Procédé servant à régénérer un filtre à lit mélangé, dans lequel une séparation d'un matériau échangeur d'ions (40) épuisé en un matériau échangeur d'anions (41) et en un matériau échangeur de cations (42) est entreprise dans un premier récipient (1), lors de laquelle se forme une couche de séparation de matériau (46) entre le matériau échangeur d'anions (41) et le matériau échangeur de cations (42), et dans lequel à la fois le matériau échangeur d'anions (41) et le matériau échangeur de cations (42) sont régénérés dans le premier récipient (1), **caractérisé en ce que**
- après la régénération du matériau échangeur d'ions (41, 42), une zone de mélange (44) comprenant la couche de séparation de matériau (46) est fixée ;
- le matériau échangeur d'anions (41) jouxtant le matériau (43) de la zone de mélange (44) est amené dans un deuxième récipient (2), dans lequel le matériau échangeur d'anions (41) amené dans le deuxième récipient (2) est à nouveau régénéré dans le deuxième récipient (2) avant que le matériau échangeur de cations (42) régénéré soit regroupé avec le matériau échangeur d'anions (41) à nouveau régénéré ;
- le matériau (43) de la zone de mélange (44) est amené dans un troisième récipient (3) ; et
- le matériau échangeur de cations (42) régénéré resté dans le premier récipient (1) est regroupé et mélangé avec le matériau échangeur d'anions (41) régénéré.

2. Procédé selon l'une quelconque des revendications précédentes, **caractérisé en ce qu'**après le regroupement du matériau échangeur de cations (42) avec le matériau échangeur d'anions (41), le matériau (43) amené dans le troisième récipient (3) de la zone de mélange (44) est à nouveau amené dans le premier récipient (1).

3. Procédé selon l'une quelconque des revendications précédentes, **caractérisé en ce que** lors d'une première étape de procédé, le matériau échangeur d'ions (40) épuisé est amené dans le premier récipient (1) depuis un récipient de travail d'un filtre à lit mélangé.

4. Procédé selon l'une quelconque des revendications précédentes, **caractérisé en ce que** la zone de mélange (44) est fixée de telle manière qu'une couche de transition (48), jouxtant la couche de séparation de matériau (46), du matériau échangeurs de cations (42) et/ou une couche de transition (47), jouxtant la couche de séparation de matériau (46), du matériau échangeur d'anions (41) sont associés à la zone de mélange (44).

5. Procédé selon la revendication 4, **caractérisé en ce que** la zone de mélange (44) est fixée de telle manière que l'épaisseur de couche de la couche de transition (48) du matériau échangeur de cations (42) est d'au moins 100 millimètres, et/ou que l'épaisseur de couche de la couche de transition (47) du matériau échangeur d'anions (41) est d'au moins 100 millimètres.

6. Procédé selon l'une quelconque des revendications précédentes, **caractérisé en ce que** lorsque le matériau échangeur d'anions (41) et/ou le matériau échangeur de cations (42) et/ou le matériau (43) de la zone de mélange (44) sont amenés depuis un récipient de départ dans un récipient de destination, un flux tourbillonnaire est généré dans le récipient de départ.

7. Procédé selon l'une quelconque des revendications précédentes, **caractérisé en ce que** lorsque le matériau échangeur d'anions (41) et/ou le matériau échangeur de cations (42) et/ou le matériau (43) de la zone de mélange (44) sont amenés depuis un récipient de départ dans un récipient de destination, le matériau se trouvant dans le récipient de départ afflue de manière tangentielle.

8. Dispositif servant à exécuter un procédé selon l'une quelconque des revendications 1 à 7, comprenant un premier récipient (1), un deuxième récipient (2) et un troisième récipient (3), dans lequel le deuxième récipient (2) et le troisième récipient (3) sont reliés par l'intermédiaire de conduits au premier récipient (1),
dans lequel le premier récipient (1) présente ;
- une unité de drainage (6) servant à la régénération spatialement séparée de matériau échangeur d'anions (41) et de matériau échangeur de cations (42) ;
- un premier conduit (11) servant à acheminer un fluide dans le premier récipient (1), dans lequel un matériau échangeur d'ions (40) est séparé en un matériau échangeur d'anions (41) et en un matériau échangeur de cations (42) au moyen du fluide acheminé par l'intermédiaire du premier conduit, de telle manière qu'une couche de séparation de matériau (46) se forme entre le matériau échangeur d'anions (41) et le matériau échangeur de cations (42) ;
- un deuxième conduit servant à acheminer un agent de régénération dans le premier récipient (1) afin de régénérer le matériau échangeur de cations (42), dans lequel l'agent de régénération acheminé est évacué par l'intermédiaire de l'unité de drainage (6) ;
- un troisième conduit (13) servant à acheminer un agent de régénération dans le premier récipient (1) afin de régénérer le matériau échangeur d'anions (41), dans lequel l'agent de régénération acheminé est évacué par l'intermédiaire de l'unité de drainage (6) ;
- un quatrième conduit servant à acheminer un fluide propulseur dans le premier récipient ;
- un cinquième conduit (15) servant à évacuer le matériau échangeur d'anions ;
- un sixième conduit (16) servant à évacuer le matériau (43) de la zone de mélange (44) hors du premier récipient ; et
- un septième conduit (17) servant à évacuer le matériau échangeur de cations (42) hors du premier récipient (1) et
- un huitième conduit (18), dans lequel le huitième conduit (18) est raccordé au niveau de l'extrémité inférieure du premier récipient (1) de manière tangentielle par rapport à la surface extérieure (49) du premier récipient (1) de telle manière qu'un flux de fluide entrant dans le premier récipient (1) par l'intermédiaire du huitième conduit (18) génère un flux tourbillonnaire.

9. Dispositif selon la revendication 8, **caractérisé en ce que** le premier récipient (1) est réalisé de manière sensiblement cylindrique et circulaire avec une surface de fond (4) et une surface de recouvrement (5), dans lequel la surface de fond (4) termine vers le bas le premier récipient (1) et la surface de recouvrement (5) termine vers le haut le premier récipient (1).

10. Dispositif selon la revendication 8 ou la revendication 9, **caractérisé en ce que** l'unité de drainage (6) est disposée à la hauteur de la couche de séparation de matériau (46) réalisée après la séparation du matériau échangeur d'ions (40).

11. Dispositif selon l'une quelconque des revendications 8 à 10, **caractérisé en ce que** le premier conduit (11) est raccordé au niveau de l'extrémité inférieure du premier récipient (1).

12. Dispositif selon l'une quelconque des revendications 8 à 11, **caractérisé en ce que** le deuxième conduit est disposé au niveau de l'extrémité inférieure du premier récipient (1).

13. Dispositif selon l'une quelconque des revendications 8 à 12, **caractérisé en ce que** le troisième conduit (13) est raccordé au niveau de l'extrémité supérieure du premier récipient (1).

14. Dispositif selon l'une quelconque des revendications 8 à 13, **caractérisé en ce que** le quatrième conduit est raccordé au niveau de l'extrémité supérieure du premier récipient (1).

15. Dispositif selon l'une quelconque des revendications 8 à 14, **caractérisé en ce que** le cinquième conduit (15) est raccordé au niveau de l'extrémité supérieure d'une zone de mélange (44) fixée comprenant la couche de séparation de matériau (46).

16. Dispositif selon l'une quelconque des revendications 8 à 15, **caractérisé en ce que** le sixième conduit (16) est raccordé au niveau de l'extrémité inférieure d'une zone de mélange (44) fixée comprenant la couche de séparation de matériau (46).

17. Dispositif selon l'une quelconque des revendications 8 à 16, **caractérisé en ce que** le septième conduit (17) est raccordé au niveau de l'extrémité inférieure du premier récipient (1).

18. Dispositif selon l'une quelconque des revendications 8 à 17, **caractérisé en ce que** le premier récipient (1) présente un neuvième conduit (19) servant à acheminer un matériau échangeur d'ions (40) épuisé dans le premier récipient (1), dans lequel le neuvième conduit (19) est raccordé au niveau de l'extrémité supérieure du premier récipient (1).
